# EUROPEAN PATENT APPLICATION

(11) **EP 3 125 210 A1**
(43) Date of publication of application: **01.02.2017**
(21) Application number: 14886721.1
(22) Date of filing: 27.03.2014
(51) Int. Cl.: G08G 1/01, G01C 21/26, G08G 1/13

(54) **DRIVING SUPPORT INFORMATION GENERATION SYSTEM, DRIVING SUPPORT INFORMATION PROVISION DEVICE, DRIVING SUPPORT INFORMATION GENERATION METHOD, AND DRIVING SUPPORT INFORMATION GENERATION PROGRAM**

(71) Applicant: Mitsubishi Electric Corporation, Chiyoda-ku Tokyo 100-8310 (JP)
(72) Inventor: UJIIE, Junya, Tokyo 100-8310 (JP); MURAYAMA, Shu, Tokyo 100-8310 (JP); ABUKAWA, Masahiro, Tokyo 100-8310 (JP)
(74) Representative: Pfenning, Meinig & Partner mbB
(86) International application number: PCT/JP2014/058998
(87) International publication number: WO 2015/145692

(57) **Abstract**

A danger information notification system (10) is a system to generate danger information (70) to be provided to a driver of a vehicle. A storage unit (23) of a server apparatus (20) stores danger reports (50) each indicating a geographical position and an event that has occurred at that position in the past. A control unit (21) of the server apparatus (20) extracts, from the danger reports (50) stored in the storage unit (23), information on one or more danger events that have occurred in a geographical range of a size corresponding to a speed of the vehicle, and aggregates the information extracted, thereby generating the danger information (70). This danger information (70) is transmitted to a vehicle-mounted apparatus (40) from the server apparatus (20) through a network (30), and is output by an information presentation unit (46).

## Description

### Technical Field

The present invention relates to a driving assistance information generation system, a driving assistance information provision apparatus, a driving assistance information generation method, and a driving assistance information generation program. The present invention relates to a danger information notification system, for example.

### Background Art

Traditionally, an apparatus mounted on a vehicle including a communication function has received provision of information such as sightseeing information, congestion information, and traffic accident information from outside the vehicle. In addition, information (or danger information) on a danger event that has not led to an accident may also be provided. As the danger event, heavy braking, abrupt steering, a slip, or fast approach to a different vehicle, a wall, or the like, for example, may be pointed out.

The danger event is detected by various sensors provided at the vehicle. The information on the danger event is transmitted to a server outside the vehicle, together with information on a position where the event has occurred. The server outside the vehicle accumulates those pieces of the information. This implements provision of the information to a different vehicle. The server extracts, as the information to be provided to the vehicle, the information on the danger event that has occurred around the vehicle, based on position information of the vehicle transmitted from the vehicle to the server. There is an effect that, by notifying a driver of the vehicle of presence of a location where the danger event has occurred, occurrence of a similar event or a traffic accident is prevented before the vehicle passes through the location.

When an amount of the danger information to be accumulated in the server increases, an amount of the danger information to be provided to the vehicle also increases. Assume that, in the vicinity of a location where a certain danger event has occurred, there are a plurality of locations where different danger events have occurred. Then, notification to the driver of the vehicle is frequently performed. This not only annoys the driver of the vehicle but also reduces attention of the driver of the vehicle.

Patent Literature 1 discloses a method of aggregating danger information and accident information transmitted from a car navigation system for each district and each type of danger, and storing each of the danger information and the accident information aggregated in association with a secondary mesh number and the number of registered danger locations.

Patent Literature 2 discloses a method of assigning a same information provision ID (identifier) to respective locations of slip information received from a server, at which slips have occurred and which are near to each other, based on an aggregation degree.

### Citation List

### Patent Literature

Patent Literature 1: JP 2003-123185A
Patent Literature 2: JP 2010-266925A

### Summary of Invention

### Technical Problem

In the method in Patent Literature 1, aggregation is performed at a time point when a server has received the danger information or the accident information transmitted from a vehicle. An aggregation range is, however, set in advance. Accordingly, the aggregation range cannot be dynamically changed.

In the method in Patent Literature 2 as well, the aggregation degree is determined in advance. Thus, once the information provision ID is assigned to the slip information, the information provision ID assigned cannot be changed.

A speed of a vehicle (vehicle speed) differs according to the condition. This means that a distance to be travelled for a certain period of time differs for each vehicle. On the other hand, the number of times of notification of a danger event to a driver of the vehicle should be limited to a certain number of times or less within a certain period of time in order to avoid reduction of attention of the vehicle driver. In order to implement this limitation, it is necessary to change a range of aggregation by the server according to the speed of the vehicle. There is a problem that this change cannot be made by the methods in Patent Document 1 and Patent Document 2.

An object of the present invention is to prevent reduction of attention of a vehicle driver due to frequent information provision, for example.

### Solution to Problem

A driving assistance information generation system according to an aspect of the present invention generates driving assistance information to be provided to a driver of a vehicle. The driving assistance information generation may include:
a setting unit to set a geographical range of a size corresponding to a speed of the vehicle;
an extraction unit to extract, from event data indicating a geographical position and one or more events that have occurred at that position in the past, information on one or more of the events that have occurred within the geographical range set by the setting unit; and
a generation unit to generate the driving assistance information by aggregating the information extracted by the extraction unit.

### Advantageous Effects of Invention

According to the present invention, the information on the one or more of the events that have occurred within the geographical range of the size corresponding to the speed of the vehicle is aggregated and provided to the driver of the vehicle. Thus, reduction of attention of the vehicle driver due to frequent information provision may be prevented.

### Brief Description of Drawings

Fig. 1 is a block diagram illustrating a configuration of a danger information notification system according to Embodiment 1.
Fig. 2 is a diagram illustrating an example of a danger report according to Embodiment 1.
Fig. 3 is a diagram illustrating an example of a danger information transmission request according to Embodiment 1.
Fig. 4 is a diagram illustrating an example of danger information according to Embodiment 1.
Fig. 5 is a flowchart illustrating operations of transmitting and receiving the danger report in the danger information notification system according to Embodiment 1.
Fig. 6 is a flowchart illustrating operations of transmitting and receiving the danger information in the danger information notification system according to Embodiment 1.
Fig. 7 is a diagram illustrating an example of a search range and an example of an aggregation range according to Embodiment 1.
Fig. 8 is a block diagram illustrating a configuration of a danger information notification system according to Embodiment 2.
Fig. 9 is a flowchart illustrating operations of transmitting and receiving a danger report in the danger information notification system according to Embodiment 2.
Fig. 10 is a flowchart illustrating operations of transmitting and receiving danger information in the danger information notification system according to Embodiment 2.
Fig. 11 is a block diagram illustrating a configuration of a danger information notification system according to Embodiment 3.
Fig. 12 is a flowchart illustrating operations of transmitting and receiving a danger report in the danger information notification system according to Embodiment 3.
Fig. 13 is a flowchart illustrating operations of transmitting and receiving danger information in the danger information notification system according to Embodiment 3.
Fig. 14 is a diagram illustrating an example of a hardware configuration of each of apparatuses included in the danger information notification system according to the embodiments of the present invention.

### Description of Embodiments

Embodiments of the present invention will be described below, using the drawings.

### Embodiment 1.

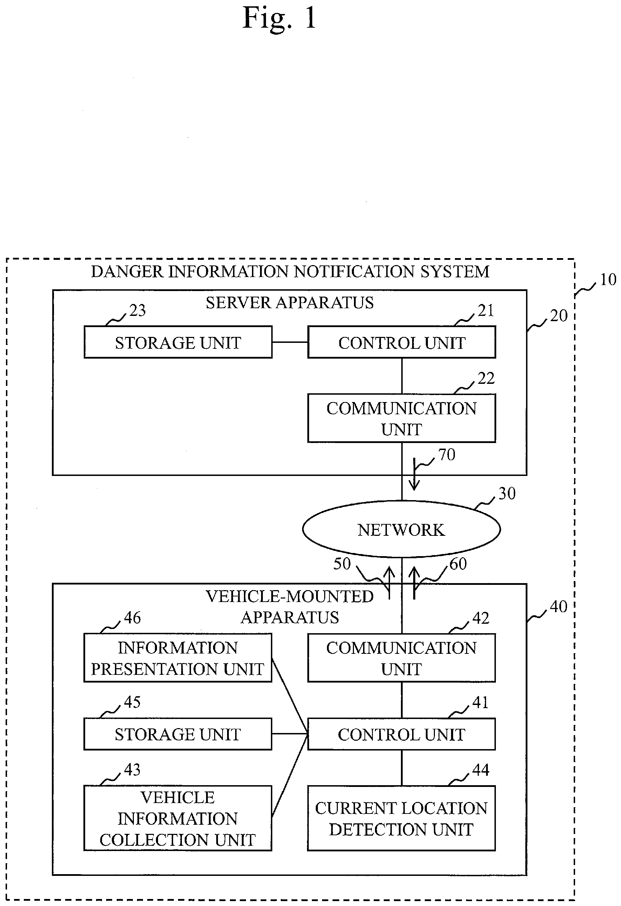

Fig. 1 is a block diagram illustrating a configuration of a danger information notification system 10 according to this embodiment.

Referring to Fig. 1, the danger information notification system 10 includes a server apparatus 20 and a vehicle-mounted apparatus 40. The server apparatus 20 and the vehicle-mounted apparatus 40 are connected through a network 30.

The server apparatus 20 is a server computer or other computer installed in a data center or the like, for example.

The server apparatus 20 includes a control unit 21, a communication unit 22, and a storage unit 23.

The control unit 21 executes a registration process of a danger report 50 received from the vehicle-mounted apparatus 40 and a transmission process of danger information 70 based on a danger information transmission request 60 received from the vehicle-mounted apparatus 40. The danger report 50, the danger information 70, and the danger information transmission request 60 will be described later.

The communication unit 22 receives data from the vehicle-mounted apparatus 40, and transmits data to the vehicle-mounted apparatus 40, through the network 30. The communication unit 22 may be implemented by a transceiver, for example.

The storage unit 23 stores the data transmitted to the server apparatus 20 from the vehicle-mounted apparatus 40 and other data.

The network 30 is a combination of a mobile communication network and the Internet or the like, for example.

The vehicle-mounted apparatus 40 is a navigation apparatus, for example. Alternatively, the vehicle-mounted apparatus 40 is a combination of the navigation apparatus or a DA (Display Audio) and a portable terminal (e.g., a smart phone, a tablet, or a cellular phone). An HUD (Head UP Display) may be further combined, as a part of the vehicle-mounted apparatus 40. The navigation apparatus, the DA, the portable terminal, and the HUD constitute an example of an apparatus to provide driving assistance information (i.e., a driving assistance information provision apparatus) that will be described later.

The vehicle-mounted apparatus 40 includes a control unit 41, a communication unit 42, a vehicle information collection unit 43, a current location detection unit 44, a storage unit 45, and an information presentation unit 46.

The control unit 41 performs processes such as processing of vehicle information from the vehicle information collection unit 43, detection of a danger using the vehicle information from the vehicle information collection unit 43 and a result of the processing and transmission of the danger report 50 to the server apparatus 20, and presentation of the danger information 70 received from the server apparatus 20 to a vehicle driver, using the information presentation unit 46.

The communication unit 42 receives the data from the server apparatus 20 and transmits the data to the server apparatus 20, through the network 30. The communication unit 42 may be implemented by a transceiver, for example.

The vehicle information collection unit 43 collects information related to driving operations of an accelerator, a brake, a steering wheel, and the like, information related to a motion of a vehicle itself such as a vehicle speed, an acceleration, and a yaw rate, information obtained from a sensor such as a camera or a radar, or the like. The vehicle information collection unit 43 is implemented by a hardware interface to collect the information from the sensor and so forth. The vehicle information collection unit 43 may be the sensor itself. As will be described later, the vehicle information collection unit 43 may also be implemented as a program to execute a function of collecting the information from the sensor and so forth.

The current location detection unit 44 is a GPS (Global Positioning System) receiver or other element including a positioning function, for example. The current location detection unit 44 provides to the control unit 41 information on a position and a travelling direction of the vehicle on which the vehicle-mounted apparatus 40 is mounted and a time.

The storage unit 45 stores the danger information 70 received from the server apparatus 20, the vehicle information from the vehicle information collection unit 43, the vehicle information from the vehicle information collection unit 43 processed by the control unit 41, and so forth.

The information presentation unit 46 is a display, a loudspeaker, or the like, for example. The information presentation unit 46 outputs the danger information 70.

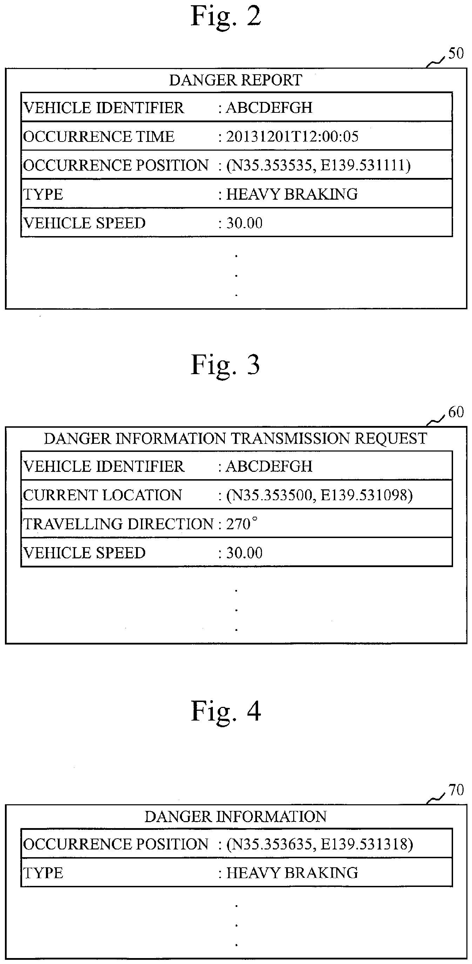

Fig. 2 is a diagram illustrating an example of the danger report 50.

As illustrated in Fig. 2, the danger report 50 includes items such as a vehicle identifier, an occurrence time, an occurrence position, a type, and a vehicle speed. The danger report 50 may include a different item. The vehicle identifier is information for uniquely identifying the vehicle-mounted apparatus 40 in the server apparatus 20. The occurrence time is a date and a time when the vehicle-mounted apparatus 40 has detected a danger event. The occurrence position is the position of the vehicle at a time point when the vehicle-mounted apparatus 40 has detected the danger event. The occurrence position is obtained from the current location detection unit 44. The type is information for making distinction among danger events such as heavy braking, abrupt steering, a slip, and fast approach to a different vehicle or a wall. The vehicle speed is the speed of the vehicle at the time point when the vehicle-mounted apparatus 40 has detected the danger event. The vehicle speed is obtained from the vehicle information collection unit 43. The value of each item illustrated in Fig. 2 is an example, and a different format may be employed if the server apparatus 20 can interpret the format.

Fig. 3 is a diagram illustrating an example of the danger information transmission request 60.

As illustrated in Fig. 3, the danger information transmission request 60 includes items such as the vehicle identifier, a current location, a travelling direction, and the vehicle speed. The danger information transmission request 60 may include a different item. The vehicle identifier and the vehicle speed are the same as the items of the same titles in the danger report 50. The current location is the position of the vehicle at a time point when the vehicle-mounted apparatus 40 transmits the danger information transmission request 60 to the server apparatus 20. The current location is obtained from the current location detection unit 44. The travelling direction is the orientation of the vehicle when true north is set to 0 degrees. The value of each item illustrated in Fig. 3 is an example, and a different format may be employed if the server apparatus 20 can interpret the format.

Fig. 4 is a diagram illustrating an example of the danger information 70.

As illustrated in Fig. 4, the danger information 70 includes items such as the occurrence position and the type. The danger information 70 may include a different item. The occurrence position and the type are the same as the items of the same titles in the danger report 50. The value of each item illustrated in Fig. 4 is an example, and a different format may be employed if the server apparatus 20 can interpret the format.

Operation of the danger information notification system 10 (i.e., a driving assistance information generation method according to this embodiment or a processing procedure of a driving assistance information generation program according to this embodiment) will be described below, separately for a situation where a danger report 50 is transmitted from the vehicle-mounted apparatus 40 and for a situation where danger information 70 is transmitted from the server apparatus 20.

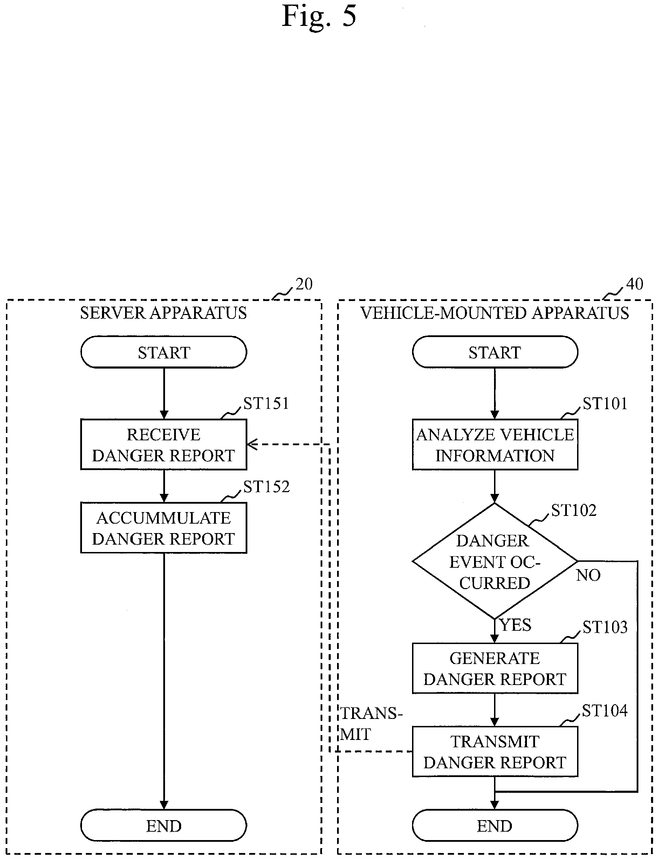

Fig. 5 is a flowchart illustrating operations of transmitting and receiving the danger report 50 in the danger information notification system 10.

The operations for the situation where the vehicle-mounted apparatus 40 transmits the danger report 50 to the server apparatus 20 in the danger information notification system 10 will be described, mainly using Fig. 5.

First, the operations of the vehicle-mounted apparatus 40 will be described.

Though not illustrated, the control unit 41 reads vehicle information from the vehicle information collection unit 43 at a constant period or at a timing when new data is collected by the vehicle information collection unit 43, and stores the vehicle information in the storage unit 45, together with a time that has been read. The "time that has been read" is a time that can be obtained inside the vehicle-mounted apparatus 40. To take an example, the "time that has been read" is a period of time elapsed after activation of the vehicle-mounted apparatus 40.

In ST101, the control unit 41 executes a process for determining occurrence or nonoccurrence of a danger event, using the vehicle information obtained from the vehicle information collection unit 43 and the vehicle information in the past stored in the storage unit 45. To take an example, when detecting heavy breaking, the control unit 41 calculates an amount of change in a stepping-in amount of a brake pedal.

In ST102, the control unit 41 determines the occurrence or nonoccurrence of the danger event, based on a result of the process in ST101. To take an example, when detecting the heavy braking, the control unit 41 evaluates whether or not the amount of change in the stepping-in amount of the brake pedal is larger than a threshold value set in advance. If it has been determined that the danger event has occurred (i.e., "YES"), the flow proceeds to ST103. If it has been determined that the danger event has not occurred (i.e., "NO"), the flow ends.

In ST103, the control unit 41 generates the danger report 50 in order to report the danger event detected in ST102 to the server apparatus 20. The control unit 41 uses a value stored in the storage unit 45 as the vehicle identifier of the danger report 50. The control unit 41 sets a time obtained from the current location detection unit 44 as the occurrence time of the danger report 50. The control unit 41 sets a position obtained from the current location detection unit 44 as the occurrence position of the danger report 50. The control unit 41 sets the event determined in ST102 to have occurred, as the type of the danger report 50. The control unit 41 sets a vehicle speed obtained from the vehicle information collection unit 43, as the vehicle speed of the danger report 50. It is assumed that if a plurality of danger events have been simultaneously detected in ST102, the control unit 41 individually generates danger reports 50.

In ST104, the control unit 41 transmits the danger report 50 generated in ST103 to the server apparatus 20, using the communication unit 42.

Subsequently, the operations of the server apparatus 20 will be described.

In ST151, the control unit 21 receives one or more danger reports 50 transmitted from the vehicle-mounted apparatus 40 in ST104, using the communication unit 22.

In ST152, the control unit 21 stores the danger reports 50 received in ST151 in the storage unit 23. It is assumed that if a plurality of danger reports 50 have been simultaneously received in ST151, the control unit 21 individually stores each danger report 50 in the storage unit 23.

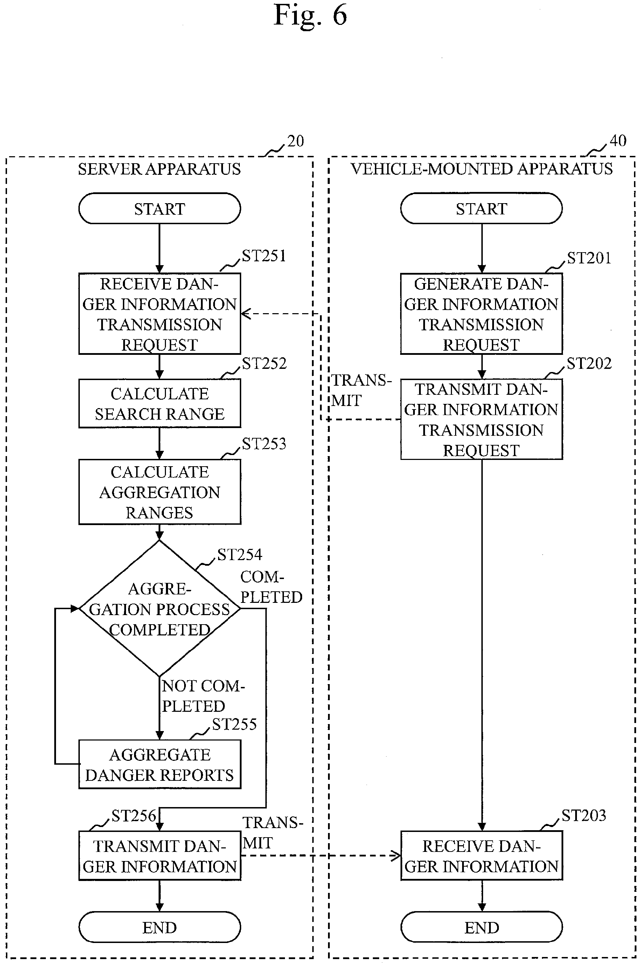

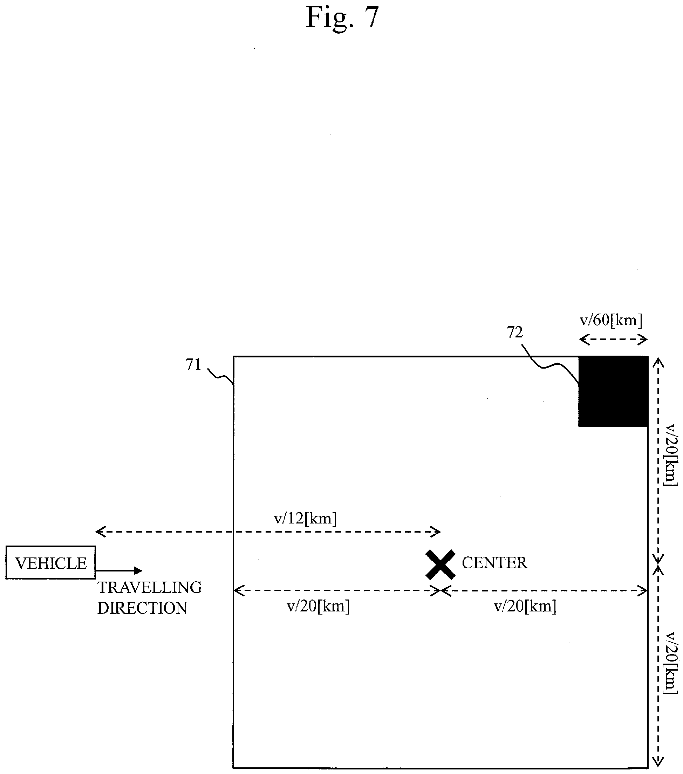

Fig. 6 is a flowchart illustrating operations of transmitting and receiving the danger information 70 in the danger information notification system 10. Fig. 7 is a diagram illustrating an example of a search range 71 and an example of an aggregation range 72.

The operations for the situation where the server apparatus 20 transmits the danger information 70 to the vehicle-mounted apparatus 40 in the danger information notification system 10 will be described, mainly using Fig. 6.

First, the operations of the vehicle-mounted apparatus 40 will be described.

In ST201, the control unit 41 generates a danger information transmission request 60. The control unit 41 uses a value stored in the storage unit 45 as the vehicle identifier of the danger information transmission request 60. The control unit 41 sets a position obtained from the current location detection unit 44 as the current location of the danger information transmission request 60. The control unit 41 sets a travelling direction obtained from the current location detection unit 44 as the travelling direction of the danger information transmission request 60. The control unit 41 sets a vehicle speed obtained from the vehicle information collection unit 43 as the vehicle speed of the danger information transmission request 60.

In ST202, the control unit 41 transmits to the server apparatus 20 the danger information transmission request 60 generated in ST201, using the communication unit 42.

In ST203, the control unit 41 receives the danger information 70 generated in ST256 from the server apparatus 20, using the communication unit 42. ST256 will be described later. The danger information 70 received is stored in the storage unit 45.

Though not illustrated, the vehicle-mounted apparatus 40 presents the danger information 70 received and stored in the storage unit 45 to a vehicle driver, using the information presentation unit 46, after ST203.

Subsequently, the operations of the server apparatus 20 will be described.

In ST251, the control unit 21 receives the danger information transmission request 60 transmitted from the vehicle-mounted apparatus 40 in ST202, using the communication unit 22.

In ST252, the control unit 21 calculates a search range 71 of the danger reports 50 accumulated in the storage unit 23, using the current location, the travelling direction, and the vehicle speed of the danger information transmission request 60 received in ST251. As illustrated in Fig. 7, for example, the control unit 21 sets the center of the search range 71 to a position after five minutes from the current location, based on the vehicle speed. Further, the control unit 21 sets, as the search range 71, a square region where a distance to be reached by the vehicle from the center in three minutes is a half of each side of the square region, based on the vehicle speed. In this case, the control unit 21 calculates the position v/12 [km] away from the current location in the travelling direction as the center, where the vehicle speed is v [km/h]. Then, the control unit 21 calculates a square region with each side thereof being v/10 [km] long, as the search range 71. The search range 71 may be a region having a shape other than a square such as a circular shape. It may be appropriately determined that a position after how many minutes from the current location is set as the center and a range to be reached by the vehicle from the center in how many minutes is set as the search range 71.

In ST253, the control unit 21 calculates aggregation ranges 72 of the danger reports 50 accumulated in the storage unit 23, using the vehicle speed of the danger information transmission request 60 received in ST251. If the danger information 70 is provided to the vehicle driver for each minute, for example, the control unit 21 sets, as each aggregation range 72, a square region having a distance to be reached by the vehicle in one minute set to the length of each side, based on the vehicle speed, as illustrated in Fig. 7. In this case, the control unit 21 calculates a square region with each side thereof being v/60 [km] long, as each aggregation range 72, where the vehicle speed is v [km/h]. That is, in the example in Fig. 7, the control unit 21 divides the search range 71 into 6 × 6 = 36 regions each of which is an aggregation range 72. Each aggregation range 72 may be a region having a shape other than a square such as a circular shape. Each aggregation range 72 may partially overlap with an adjacent region. It may be appropriately determined that a range to be reached by the vehicle in how many minutes is set as each aggregation range 72.

In ST254, the control unit 21 determines whether or not an aggregation process in ST255 that will be described later has been completed for each aggregation range 72. If the aggregation process has been completed, the flow proceeds to ST256. If the aggregation process has not been completed, the flow proceeds to ST255.

In ST255, the control unit 21 aggregates zero or more danger reports 50 accumulated in the storage unit 23 for each aggregation range 72. Specifically, the control unit 21 first extracts the danger reports 50 included in each aggregation range 72, based on position information. Subsequently, the control unit 21 divides the danger reports 50 by the type of each danger report 50. The control unit 21 generates one-time danger information 70 from the danger reports 50 for each type. The one-time danger information 70 is the danger information 70 to be provided to the vehicle driver at one time. If the danger information 70 is provided to the vehicle driver for each minute, for example, the one-time danger information 70 is the danger information 70 to be provided per minute. The control unit 21 sets the type of the danger information 70 to be the same as the type of the danger reports 50 aggregated. The control unit 21 sets a position or a combination of a plurality of positions selected from the occurrence position of at least one danger report 50 to the occurrence position of the danger information 70. To take an example, the control unit 21 selects the occurrence position of the danger report 50 whose occurrence time is latest. Alternatively, the control unit 21 calculates the mean of the occurrence positions of the danger reports 50. When no danger report 50 for aggregation is present in the storage unit 23, the control unit 21 does nothing.

In ST256, the control unit 21 transmits the danger information 70 generated by aggregating the danger reports 50 in ST255 to the vehicle-mounted apparatus 40, using the communication unit 22. When the danger information 70 to be transmitted is not present, the control unit 21 transmits the danger information 70 indicating nonoccurrence of a danger event to the vehicle-mounted apparatus 40, using the communication unit 22.

As mentioned above, the server apparatus 20 according to this embodiment calculates the search range 71 of the danger reports 50 accumulated in the storage unit 23, using the current location, the travelling direction, and the vehicle speed included in the danger information transmission request 60 received from the vehicle-mounted apparatus 40, using the communication unit 22. Then, the server apparatus 20 calculates the aggregation ranges 72 of the danger reports 50 accumulated in the storage unit 23, using the vehicle speed of the danger information transmission request 60. Finally, the server apparatus 20 aggregates the danger reports 50 that are present in each aggregation range 72 for each type of the danger reports 50. The server apparatus 20 generates the one-time danger information 70 for each aggregation range 72 and for each type. The server apparatus 20 transmits, to the vehicle-mounted apparatus 40, the danger information 70 generated, using the communication unit 22. Accordingly, in this embodiment, there is an effect that each aggregation range 72 of the danger information 70 may be changed for each vehicle having a different vehicle speed. Assume that the type of the danger information 70 to be transmitted to the vehicle-mounted apparatus 40 is one in the example in Fig. 7. Then, the number of danger events to be notified to the driver of the vehicle including the vehicle-mounted apparatus 40 may be limited to at most one per minute, irrespective of a magnitude of the vehicle speed. That is, there is an effect of preventing reduction of attention of the driver due to frequent presentation of the danger information 70.

The danger information notification system 10 or the server apparatus 20 according to this embodiment is an example of a driving assistance information generation system to generate driving assistance information to be provided to a vehicle driver. In this embodiment, the danger information notification system 10 or the server apparatus 20 generates danger information 70 being information on a danger event that has occurred on a road, as the driving assistance information. The danger information notification system 10 or the server apparatus 20 may generate information on an event other than the danger event such as a traffic jam, as the driving assistance information. Even when the danger information notification system 10 generates the information on the event other than the danger event, contents of the information are just different from those of the danger information 70, and operation of the danger information notification system 10 is the same as that in this embodiment.

The storage unit 23 of the server apparatus 20 in this embodiment stores danger reports 50. The danger reports 50 are an example of event data indicating a geographical position and one or more events that have occurred at that position in the past. When the danger information notification system 10 generates the information on the events other than the danger events, the danger reports 50 are replaced by data indicating an occurrence time, an occurrence position, a type, and the like of each of the events other than the danger events.

The control unit 21 of the server apparatus 20 in this embodiment extracts, from the danger reports 50 stored in the storage unit 23, information (i.e., zero or more danger reports 50) on one or more of the danger events that have occurred in a geographical range (i.e., an aggregation range 72) of a size corresponding to a speed of the vehicle, and aggregates the information extracted, thereby generating the danger information 70.

In this embodiment, a limitation amount of the danger information 70 is set. If the danger information 70 is provided to the vehicle driver a plurality of times, for example, the limitation amount for each of the plurality of times is set in advance as the amount of the danger information 70. To take an example, the limitation amount for each time is set by the number of danger events for each type (e.g., only one danger event for each type for each time). Alternatively, the limitation amount for each time is set by the number of danger events irrespective of the types (e.g., only one danger event in total for all the types for each time). Alternatively, the limitation amount for each time is set by the number of occurrence positions for each type (e.g., only one location for each type for each time). Alternatively, the limitation amount for each time is set by the number of occurrence positions, irrespective of the types (e.g., only one location in total for all the types for each time). Alternatively, the limitation amount for each time is set by the number of the types (e.g., any number of locations for each time when the number of the types is one). Alternatively, the limitation amount for each time is set by the size of data to be transmitted to the vehicle-mounted apparatus 40 (e.g., several kilo bytes).

When an amount of the information on the one or more of the danger events that have occurred within the aggregation range 72 is larger than the limitation amount for each time, the control unit 21 of the server apparatus 20 selects a part of the information, thereby aggregating the information extracted. When the number of the one or more of the danger events that have occurred within the aggregation range 72 is larger than a limitation number for each time, for example, the control unit 21 selects information on one or some of those danger events, thereby aggregating the information extracted. Information on which danger event should be selected is determined according to the occurrence time of the danger reports 50 (i.e., a date and a time when each of the one or more of the danger events has occurred), for example.

Alternatively, when the number of positions where two or more of the danger events with the same type that have occurred within the aggregation range 72 is larger than a limitation number for each time, the control unit 21 of the server apparatus 20 generates information indicating a statistic of those positions (e.g, a mean value or an intermediate value) and the type of the two or more of the danger events, as the danger information 70.

Even if information aggregation has been performed using any one of the above-mentioned methods, information on one or more of the danger events that have occurred within the geographical range of the size corresponding to the speed of the vehicle is provided to the vehicle driver for each time. Consequently, according to this embodiment, reduction of attention of the vehicle driver due to frequent information provision may be prevented.

The control unit 21 of the server apparatus 20 in this embodiment predicts a position to be passed through by the vehicle in the future, based on the position and the speed of the vehicle, to identify the center of the search range 71. The control unit 21 sets, as the aggregation range 72, a range to be passed through by the vehicle from the center of the search range 71 for each of the plurality of times. Thus, according to this embodiment, information on one or more of the danger events that have occurred in the past on a road being travelled by the vehicle or a road that will be travelled by the vehicle may be notified to the vehicle driver, for each time. That is, the information that will be helpful for safety driving may be notified to the vehicle driver at an appropriate timing.

In this embodiment, a minimum value may be provided for each size of the search range 71 and the aggregation range 72. When the speed of the vehicle is lower than a threshold value (e.g., 10 [km/h]), for example, the control unit 21 of the server apparatus 20 may set the size of the aggregation range 72 to the minimum size value. This may avoid a problem that the search range 71 and the aggregation range 72 cannot be set or are extremely reduced, even when the vehicle stops or even during travelling of the vehicle at a low speed such as crawling,.

The vehicle-mounted apparatus 40 may accumulate a history of vehicle speeds in the storage unit 45 and the control unit 41 may set the mean of the vehicle speeds to the vehicle speed of the danger information transmission request 60 instead of setting the vehicle speed obtained from the vehicle information collection unit 43 to the vehicle speed of the danger information transmission request 60. To take an example, the control unit 21 of the server apparatus 20 may set the size of the aggregation range 72 according to a speed statistic (e.g., a mean value, an intermediate value, or a dispersion that will be described later) of the vehicle obtained from the history of the vehicle speeds. This makes it difficult for the search range 71 and the aggregation range 72 to be greatly changed. Consequently, there is an effect that it becomes difficult also for an interval of presentation of the danger information 70 to the driver of the vehicle including the vehicle-mounted apparatus 40 to be greatly changed. The mean of the vehicle speeds may be other than an arithmetic mean. By employing a moving average, for example, an effect is provided that a usage amount of the storage unit 45 may be reduced to a certain level and an amount of calculation required for computing the mean is also reduced. Further, by comparing the vehicle speed obtained from the vehicle information collection unit 43 with the above-mentioned mean value, it may be inferred that the vehicle at a current time point tends to be accelerated or deaccelerated.

In addition to the vehicle speed of the danger information transmission request 60, the server apparatus 20 may use the vehicle speed of a danger information transmission request 60 from at least one different vehicle located in the vicinity of the vehicle-mounted apparatus 40 that has transmitted the danger information transmission request 60 and having substantially the same travelling direction as the vehicle. To take an example, the control unit 21 of the server apparatus 20 may set the size of the aggregation range 72 according to the speed of the vehicle and the speed of the different vehicle that is present in the vicinity of that vehicle. This makes it difficult to greatly change the search range 71 and the aggregation range 72 as in the case of using the above-mentioned mean. Consequently, an effect is provided that it becomes difficult also for the interval of presentation of the danger information 70 to the driver of the vehicle including the vehicle-mounted apparatus 40 to be greatly changed.

The vehicle-mounted apparatus 40 may accumulate the history of the vehicle speeds in the storage unit 45 and may include the dispersion of the vehicle speeds in the danger information transmission request 60 instead of setting only the vehicle speed of the danger information transmission request 60. This may allow the server apparatus 20 to infer a range of a vehicle speed when the vehicle is accelerated and a range of a vehicle speed when the vehicle is deaccelerated, by using the dispersion of the vehicle speeds. It may be inferred by the above-mentioned method whether the vehicle including the vehicle-mounted apparatus 40 that has transmitted the danger information transmission request 60 tends to be accelerated or deaccelerated. Thus, it is also possible to correct the aggregation range 72, using a result of this inferring. Assume that a positive value of the square root of the dispersion is indicated by σ, for example. Then, when the vehicle tends to be accelerated, a process of adopting the mean value of the vehicle speeds + σ as a vehicle speed to be used for calculating the aggregation range 72 becomes possible.

The vehicle-mounted apparatus 40 may request the server apparatus 20 to select the danger information 70 aggregated separately for each type of the danger reports 50 and transmit, to the vehicle-mounted apparatus 40, the danger information 70 selected. To take an example, using the vehicle identifier of the danger information transmission request 60, the server apparatus 20 extracts one or more danger reports 50 from a corresponding vehicle that have been accumulated in the storage unit 23. Then, the server apparatus 20 transmits only the danger information 70 having the same type as the danger report 50 including a newest occurrence time. Alternatively, the server apparatus 20 transmits only the danger information 70 having the same type as the danger report 50 including the largest number of times of report. This may further reduce an amount of data transmission to the vehicle-mounted apparatus 40. Further, it becomes possible to provide the danger information 70 to which the driver of the vehicle including the vehicle-mounted apparatus 40 should really give attention.

The vehicle-mounted apparatus 40 may select, from the danger information 70 received from the server apparatus 20, the information to be presented to the vehicle driver, based on the driving operation of the driver. To take an example, when the vehicle-mounted apparatus 40 has received a plurality of types of the danger information 70 from the server apparatus 20, the vehicle-mounted apparatus 40 may select only one of the types of the danger information 70 and may present, to the driver, the danger information 70 selected. The vehicle-mounted apparatus 40 may determine the information to be selected, based on data obtained from the vehicle information collection unit 43. That is, the control unit 41 of the vehicle-mounted apparatus 40 may select the information to be actually provided to the vehicle driver from the danger information 70 generated by the control unit 21 of the server apparatus 20, according to the state of the vehicle. To take an example, the vehicle-mounted apparatus 40 accumulates vehicle speeds in the storage unit 45 to calculate an acceleration. Then, when the absolute value of the acceleration is larger than a certain value, the vehicle-mounted apparatus 40 selects the danger information 70 including heavy braking. With such arrangement, selection of the danger information 70 using the data obtained from the vehicle information collection unit 43 that is not transmitted to the server apparatus 20 becomes possible. That is, by reducing an amount of the information to be provided to the driver on the side of the vehicle-mounted apparatus 40 as well, reduction of attention of the vehicle driver may be further prevented.

When executing the aggregation process, the server apparatus 20 may use a different item as well as the occurrence position and the type of each danger report 50. To take an example, the server apparatus 20 may narrow down a target for the aggregation process to one or more of the danger reports 50 including occurrence times within one year from a time when the aggregation process is executed. The server apparatus 20 may also perform narrowing-down by a time of a day, a weekday/weekend, a season, or the like. With such arrangement, the danger reports 50, in which occurrence situations greatly differ according to a difference in the items other than the occurrence position and the type, may be more appropriately aggregated to generate the danger information 70, and the danger information 70 generated may be provided to the vehicle-mounted apparatus 40. When there is a region in which heavy braking frequently occurs only in the evening, for example, it becomes possible not to transmit the danger information 70 including the type of the heavy braking to a vehicle running in that region early in the morning. Further, by adding a travelling direction to each danger report 50 as in the danger information transmission request 60, selection of the danger report 50 based on the travelling direction becomes possible. This allows the danger report 50 transmitted from a vehicle-mounted apparatus 40 of a different vehicle running opposite to the travelling direction of the vehicle-mounted apparatus 40 that has transmitted the danger information transmission request 60 to be excluded from a target for aggregation.

An item that describes a specific narrowing-down method may be added to each danger information transmission request 60. In this case, the server apparatus 20 executes narrowing-down based on specification from the vehicle-mounted apparatus 40. To take an example, the control unit 41 of the vehicle-mounted apparatus 40 specifies for the control unit 21 of the server apparatus 20 a condition for aggregating danger event information extracted from the storage unit 23. With such arrangement, provision of the danger information 70 in response to a request from the vehicle-mounted apparatus 40 or the driver of the vehicle including the vehicle-mounted apparatus 40 becomes possible.

The server apparatus 20 may manage each danger report 50 for each contents of narrowing-down. To take an example, the server apparatus 20 may construct, in the storage unit 23, a database for registering all the danger reports 50 and a database for storing just one or more of the danger reports 50 of danger events that have occurred from 6 to 8 a.m. With such arrangement, when narrowing-down is performed, a period of time needed for aggregation of the danger reports 50 may be reduced.

In this embodiment, a timing at which the vehicle-mounted apparatus 40 transmits the danger information transmission request 60 is arbitrary. The server apparatus 20 transmits, together with the danger information 70, information on the search range 71 to the vehicle-mounted apparatus 40, for example. The vehicle-mounted apparatus 40 determines a timing of transmitting a subsequent danger information transmission request 60, based on the search range 71. With such arrangement, repeated reception of the danger information 70 already received by the vehicle-mounted apparatus 40 from the server apparatus 20 may be prevented. That is, it may be so arranged that overlapping of the search ranges 71 of the danger reports 50 in the server apparatus 20 does not occur or that an overlapping range is reduced.

When the travelling direction of the vehicle including the vehicle-mounted apparatus 40 greatly changes, the vehicle-mounted apparatus 40 may immediately transmit the danger information transmission request 60. When an amount of change in the travelling direction of the vehicle exceeds a threshold value, for example, the control unit 41 of the vehicle-mounted apparatus 40 may transmit the danger information transmission request 60 to the control unit 21 of the server apparatus 20 (i.e., may request setting of the aggregation range 72). With such arrangement, a period of time during which a region the vehicle is headed to in the future does not become overlapped with the search range 71 of the danger reports 50 in the server apparatus 20, may be reduced. That is, the period of time during which provision of the danger information 70 from the server apparatus 20 to the vehicle-mounted apparatus 40 is interrupted may be reduced.

In this embodiment, all or some of the processes to be executed by the control unit 21 of the server apparatus 20 may be executed by the control unit 41 of the vehicle-mounted apparatus 40. When a certain process is executed by the control unit 41 of the vehicle-mounted apparatus 40 in place of the control unit 21 of the server apparatus 20, data necessary for that process is stored in the storage unit 45 of the vehicle-mounted apparatus 40 instead of being stored in the storage unit 23 of the server apparatus 20. When all the processes are executed by the control unit 41 of the vehicle-mounted apparatus 40, the server apparatus 20 may be omitted. That is, the driving assistance information generation system may be implemented by the vehicle-mounted apparatus 40 alone.

In this embodiment, control may be so performed that the driving assistance information is provided by the driving assistance information provision apparatus. The driving assistance information is generated by the processes by the server apparatus 20. That is, the driving assistance information is generated by aggregating, from event data indicating a geographical position and one or more events that have occurred at that position in the past, information on one or more of the events that have occurred within a geographical range of a size corresponding to the speed of the vehicle. In this case, as a method of providing the driving assistance information, a notification using sound, a notification using display of an image, a notification using a combination of the sound and the image, or a notification using vibration is provided, for example. The driving assistance information provision apparatus may display one or more pieces of the danger information 70 within the aggregation range 72 received from the control unit 21 at one or more locations on a screen of the navigation apparatus or the portable terminal, being associated with a map, for example. By doing so, it becomes possible for the driver of the vehicle and so forth to easily grasp the positions of the one or more pieces of the danger information 70. The driving assistance information provision apparatus may display one or both of the search range 71 and the aggregation range 72 calculated by the control unit 21, together with the one or more pieces of the danger information 70. By doing so, it becomes possible for the driver of the vehicle and so forth to visually grasp a range from which the one or more pieces of the danger information 70 is extracted. It may be so arranged that the driver and so forth change the one or more pieces of the danger information 70, the search range 71, or the aggregation range 72 displayed. By doing so, the aggregation range 72 determined corresponding to the vehicle speed may be further optimized according to the preference of the driver and so forth.

### Embodiment 2.

With respect to this embodiment, mainly a difference from Embodiment 1 will be described.

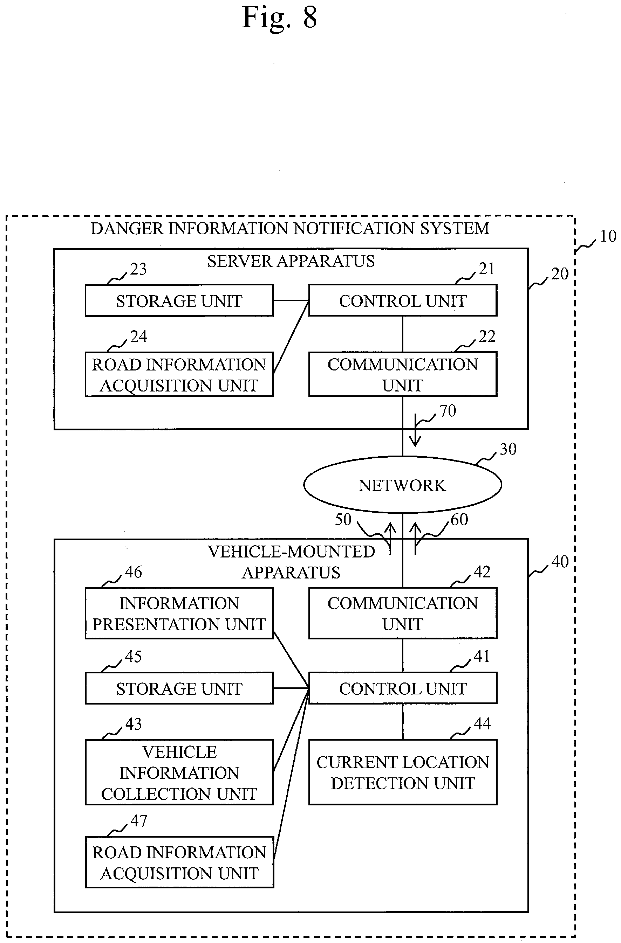

Fig. 8 is a block diagram illustrating a configuration of the danger information notification system 10 according to this embodiment.

In this embodiment, the server apparatus 20 and the vehicle-mounted apparatus 40 hold road information. The server apparatus 20 uses the road information, thereby allowing aggregation of danger reports 50 in consideration of disposition of roads and intersections.

The danger information notification system 10 in Fig. 8 includes the server apparatus 20 and the vehicle-mounted apparatus 40, as in Embodiment 1.

In addition to the control unit 21, the communication unit 22, and the storage unit 23 that are the same as those in Embodiment 1, the server apparatus 20 includes a road information acquisition unit 24.

The storage unit 23 in this embodiment further stores the road information indicating the coordinates of edge points (start point and end point) of each road, the coordinates of each intersection, the shape of each road (a numerical expression or the like for representing a straight line or, in case of a curve, representing a curved line), and so forth. To the roads and the intersections defined by the road information, identifiers for uniquely identifying them are assigned. The coordinates indicated by the road information are assumed to have the same format as that of the occurrence position of each danger report 50.

The road information acquisition unit 24 acquires the road information stored in the storage unit 23. The road information acquisition unit 24 is used by the control unit 21.

In addition to the control unit 41, the communication unit 42, the vehicle information collection unit 43, the current location detection unit 44, the storage unit 45, and the information presentation unit 46 that are the same as those in Embodiment 1, the vehicle-mounted apparatus 40 includes a road information acquisition unit 47.

The storage unit 45 in this embodiment further stores the above-mentioned road information.

The road information acquisition unit 47 acquires the road information stored in the storage unit 45. The road information acquisition unit 47 is used by the control unit 41.

Operation of the danger information notification system 10 (i.e., a driving assistance information generation method according to this embodiment or a processing procedure of a driving assistance information generation program according to this embodiment) will be described below, separately for a situation where a danger report 50 is transmitted from the vehicle-mounted apparatus 40 and for a situation where danger information 70 is transmitted from the server apparatus 20.

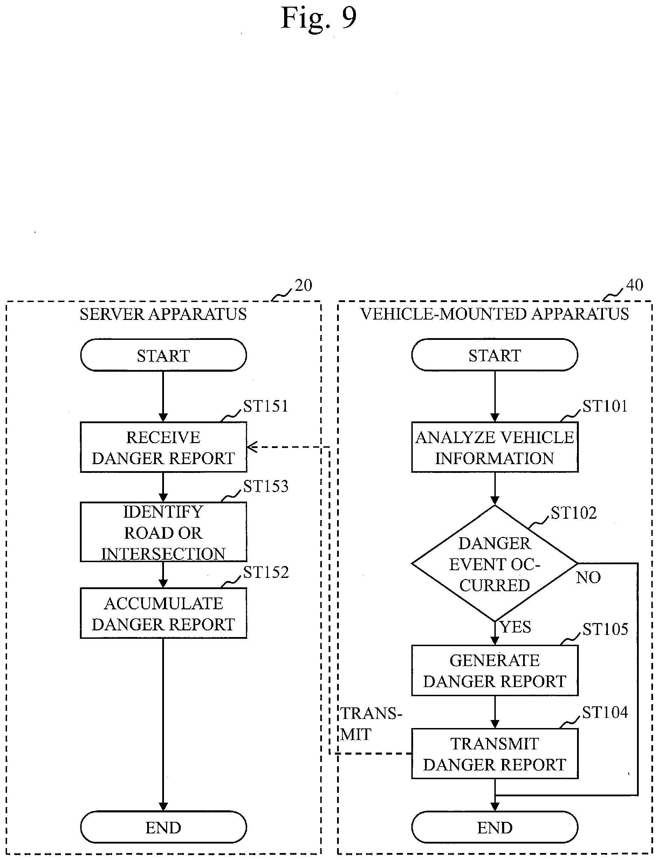

Fig. 9 is a flowchart illustrating operations of transmitting and receiving the danger report 50 in the danger information notification system 10.

The operations for the situation where the vehicle-mounted apparatus 40 transmits the danger report 50 to the server apparatus 20 in the danger information notification system 10 will be described, mainly using Fig. 9.

First, the operations of the vehicle-mounted apparatus 40 will be described.

ST101, ST102, and ST104 are the same as those in Embodiment 1 illustrated in Fig. 5.

In ST105, the control unit 41 generates the danger report 50 in order to report the danger event detected in ST102 to the server apparatus 20. The control unit 41 sets values in the vehicle identifier, the occurrence time, the occurrence position, the type, and the vehicle speed of the danger report 50 in a similar way to that in ST103 in Embodiment 1. In this embodiment, in addition to the occurrence time, the occurrence position, the type, and the vehicle speed, a travelling direction is included in the danger report 50. The control unit 41 sets a travelling direction obtained from the current location detection unit 44 as the travelling direction of the danger report 50.

Subsequently, the operations of the server apparatus 20 will be described.

ST151 and ST152 are the same as those in Embodiment 1 illustrated in Fig. 5.

In ST 153, with respect to each of at least one danger report 50 received in ST151, the control unit 21 identifies, from among the roads and the intersections accumulated in the storage unit 23, the road or the intersection closest to the occurrence position of the danger report 50 by the road information acquisition unit 24, using the occurrence position and the travelling direction of the danger report 50. When the road is closest, the control unit 21 calculates orientations of the road based on the road shape and the relationship between the start point and the end point, and selects the orientation closer to the travelling direction of the danger report 50.

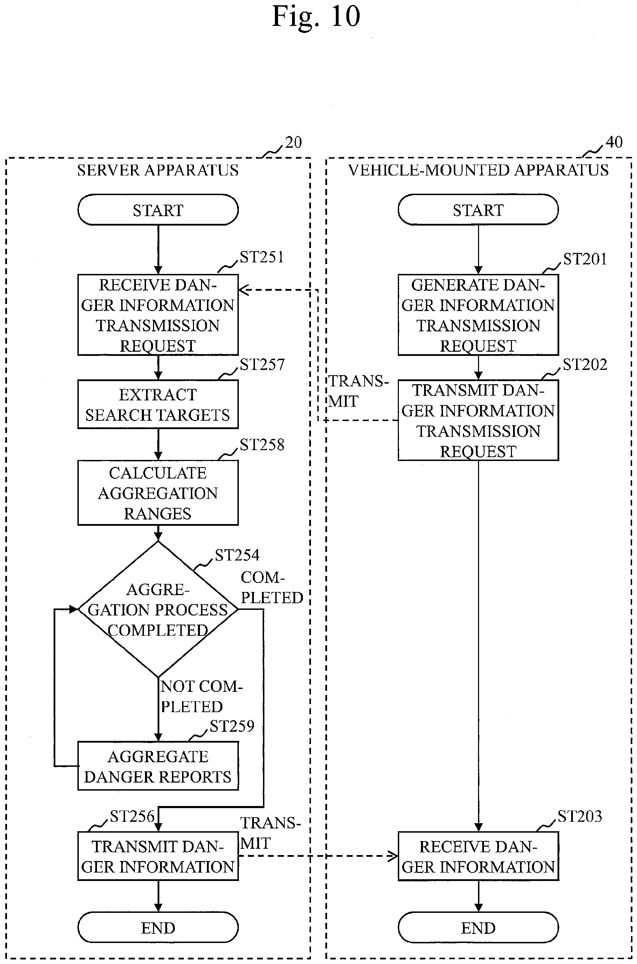

Fig. 10 is a flowchart illustrating operations of transmitting and receiving the danger information 70 in the danger information notification system 10.

The operations for the situation where the server apparatus 20 transmits the danger information 70 to the vehicle-mounted apparatus 40 in the danger information notification system 10 will be described, mainly using Fig. 10.

The operations of the vehicle-mounted apparatus 40 (ST201, ST202, and ST203) are the same as those in Embodiment 1 illustrated in Fig. 6.

The operations of the server apparatus 20 will be described below.

ST251, ST254, and ST256 are the same as those in Embodiment 1 illustrated in Fig. 6.

In ST257, the control unit 21 calculates a search range 71 of the danger reports 50 accumulated in the storage unit 23, using the current location, the travelling direction, and the vehicle speed of the danger information transmission request 60 received in ST251 and the road information stored in the storage unit 23. To take an example, the control unit 21 first identifies the closest point on the road or the closest intersection, using the current location and the travelling direction of the danger information transmission request 60. Then, the control unit 21 extracts one or more of the identifiers of roads and intersections that are reachable in three minutes from the point or the intersection identified, using the vehicle speed and the travelling direction of the danger information transmission request 60. Since the information indicating each road includes a latitude, a longitude, and the shape of the road, the length of the road may be calculated, using these pieces of information.

In ST258, the control unit 21 calculates aggregation ranges 72 of the danger reports 50 extracted in ST257, using the vehicle speed of the danger information transmission request 60 received in ST251. To take an example, the control unit 21 sets, as one aggregation range 72, a range that is reachable in one minute from the point on the road or the intersection that is the closest to the current location of danger information transmission request 60 and has been identified in ST257. When an intersection is included in the reachable range, since the travelling direction of the vehicle is not restricted to one particular direction at the intersection, the intersection is set to the end point of the aggregation range 72 and the start point of a subsequent aggregation range 72.

In ST259, the control unit 21 aggregates zero or more danger reports 50 accumulated in the storage unit 23 for each aggregation range 72. Specifically, the control unit 21 extracts, from the storage unit 23, the danger reports 50 having the one or more of the identifiers extracted in ST257. Then, the control unit 21 divides the danger reports 50 by the type of each danger report 50. The control unit 21 generates the one-time danger information 70 from the danger reports 50 for each type. Values to be set in the danger information 70 are defined in a similar way to those in ST255 in Embodiment 1. The control unit 21 further selects the identifier for the road or the intersection closest to the occurrence position of the danger information 70 from the one or more of the identifiers extracted in ST257 and sets the identifier selected.

As mentioned above, the server apparatus 20 according to this embodiment calculates the search range 71 of the danger reports 50 accumulated in the storage unit 23, using the current location, the travelling direction, and the vehicle speed included in the danger information transmission request 60 received from the vehicle-mounted apparatus 40 using the communication unit 22 and the road information obtained by the road information acquisition unit 24. Then, the server apparatus 20 calculates the aggregation ranges 72 of the danger reports 50 accumulated in the storage unit 23, using the vehicle speed of the danger information transmission request 60 and the road information obtained by the road information acquisition unit 24. Finally, the server apparatus 20 aggregates the danger reports 50 in each aggregation range 72 for each type of the danger reports 50. The server apparatus 20 generates the one-time danger information 70, for each aggregation range 72 and for each type. Using the communication unit 22, the server apparatus 20 transmits to the vehicle-mounted apparatus 40, the danger information 70 generated. That is, the control unit 21 of the server apparatus 20 in this embodiment refers to the road information, and when an intersection is present in a range to be passed through by a vehicle, the control unit 21 of the server apparatus 20 sets aggregation ranges 72 by division by the intersection. Accordingly, as compared with Embodiment 1, in this embodiment, there is an effect that aggregation of the danger reports 50 may be performed in consideration of disposition of the roads and the intersections. Specifically, information on a danger event that has occurred at the intersection at each end of a certain road may be included in successive two pieces of one-time danger information 70 rather than one piece of one-time danger information 70 alone.

There may be an intersection included in one aggregation range 72 alone. When the number of intersections included in the aggregation range 72 exceeds a threshold value, for example, the server apparatus 20 may set aggregation ranges 72 by division by the number of the intersections that are necessary so that the number of the intersections becomes the threshold value or less. This may avoid a situation where the number of the aggregation ranges 72 greatly increases.

### Embodiment 3.

With respect to this embodiment, mainly a difference from Embodiment 1 will be described.

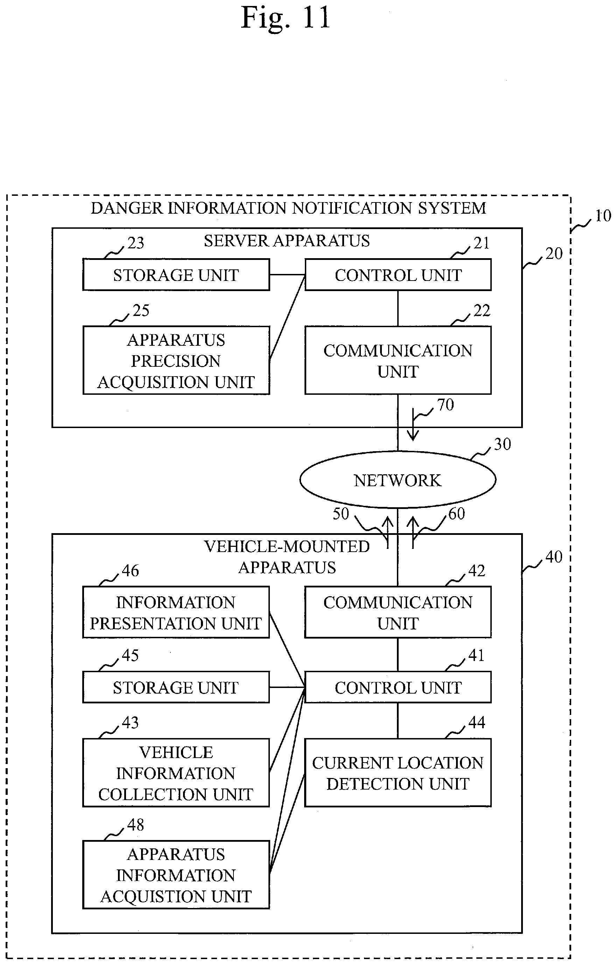

Fig. 11 is a block diagram illustrating a configuration of the danger information notification system 10 according to this embodiment.

Precision of position information obtained from a GPS receiver differs according to each product of the GPS receiver. The precision of position information obtained even from the same GPS receiver changes according to the surrounding environment. This holds true for an apparatus other than the GPS receiver. Accordingly, preferably, a difference in precision of position information obtained from the current location detection unit 44 is taken into consideration.

In this embodiment, information for estimating the precision of position information is provided to the server apparatus 20 from the vehicle-mounted apparatus 40. The server apparatus 20 performs weighting on each danger report 50, using that information. This makes it possible to generate danger information 70 greatly affected by the danger reports 50 having a high precision of position information. Accordingly, the danger information 70 with higher reliability may be provided to a driver of a vehicle including the vehicle-mounted apparatus 40.

The danger information notification system 10 in Fig. 11 includes the server apparatus 20 and the vehicle-mounted apparatus 40, as in Embodiment 1.

In addition to the control unit 21, the communication unit 22, and the storage unit 23 that are the same as those in Embodiment 1, the server apparatus 20 includes an apparatus precision acquisition unit 25.

The storage unit 23 in this embodiment further stores positioning precision information indicating an implementation form (e.g., the product name of a GPS receiver) and performance of the current location detection unit 44 of the vehicle-mounted apparatus 40. It is assumed in this embodiment, one of numerical values of 1 to 10 is entered for the performance.

The apparatus precision acquisition unit 25 acquires the positioning precision information stored in the storage unit 23. The apparatus precision acquisition unit 25 is used by the control unit 21.

In addition to the control unit 41, the communication unit 42, the vehicle information collection unit 43, the current location detection unit 44, the storage unit 45, and the information presentation unit 46 that are the same as those in Embodiment 1, the vehicle-mounted apparatus 40 includes an apparatus information acquisition unit 48.

The apparatus information acquisition unit 48 acquires information of the current location detection unit 44.

Operation of the danger information notification system 10 (i.e., a driving assistance information generation method according to this embodiment or a processing procedure of a driving assistance information generation program according to this embodiment) will be described below, separately for a situation where a danger report 50 is transmitted from the vehicle-mounted apparatus 40 and for a situation where danger information 70 is transmitted from the server apparatus 20.

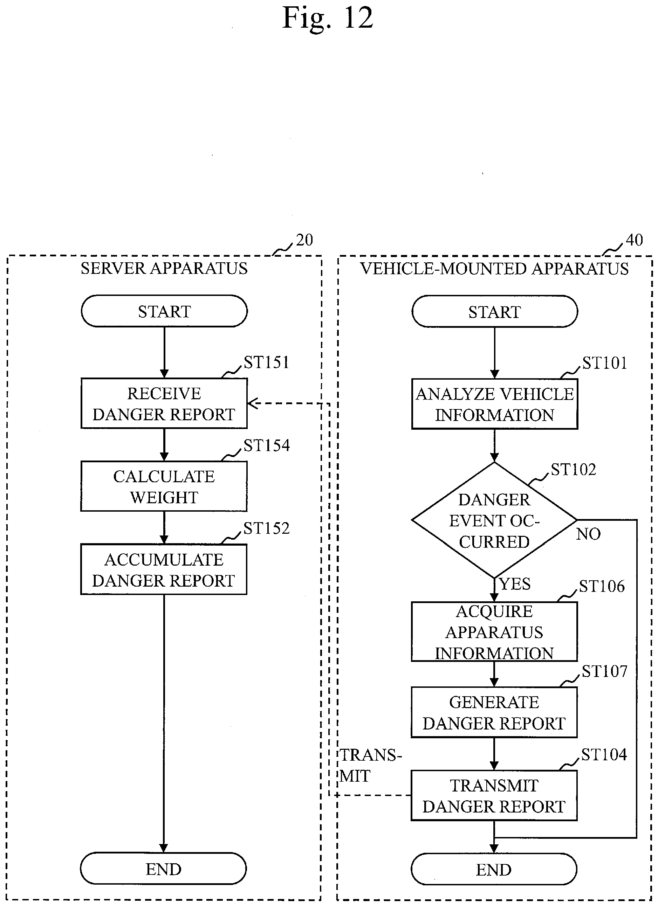

Fig. 12 is a flowchart illustrating operations of transmitting and receiving the danger report 50 in the danger information notification system 10.

The operations for the situation where the vehicle-mounted apparatus 40 transmits the danger report 50 to the server apparatus 20 in the danger information notification system 10 will be described, mainly using Fig. 12.

First, the operations of the vehicle-mounted apparatus 40 will be described.

ST101, ST102, and ST104 are the same as those in Embodiment 1 illustrated in Fig. 5.

Though not illustrated, it is assumed that the apparatus information acquisition unit 48 acquires the number of GPS satellites receiving navigation data (i.e., GPS satellite quantity) and a unique apparatus name from the current location detection unit 44 and stores these pieces of information in a memory or the like. The apparatus information acquisition unit 48 periodically acquires the GPS satellite quantity from the current location detection unit 44. Alternatively, when the GPS satellite quantity changes, the GPS satellite quantity is notified to the apparatus information acquisition unit 48 from the current location detection unit 44.

In ST 106, the control unit 41 acquires the unique apparatus name and the GPS satellite quantity from the apparatus information acquisition unit 48.

In ST107, the control unit 41 generates the danger report 50 in order to report the danger event detected in ST102 to the server apparatus 20. The control unit 41 sets values in the vehicle identifier, the occurrence time, the occurrence position, the type, and the vehicle speed of the danger report 50 in a similar way to that in ST103 in Embodiment 1. In this embodiment, in addition to the occurrence time, the occurrence position, the type, and the vehicle speed, a unique apparatus name and GPS satellite quantity are included in the danger report 50. The control unit 41 sets the unique apparatus name and the GPS satellite quantity acquired in ST106 in the danger report 50.

Subsequently, the operations of the server apparatus 20 will be described.

ST151 and ST152 are the same as those in Embodiment 1 illustrated in Fig. 5.

In ST154, using the unique apparatus name stored in at least one danger report 50 received in ST151, the control unit 21 acquires corresponding apparatus performance from the storage unit 23, by the apparatus precision acquisition unit 25. Then, the control unit 21 calculates the weight of the danger report 50, using the apparatus performance acquired and the GPS satellite quantity stored in the danger report 50. To take an example, the control unit 21 calculates the weight = the apparatus performance × the GPS satellite quantity. The control unit 21 further adds, to the danger report 50, the weight calculated.

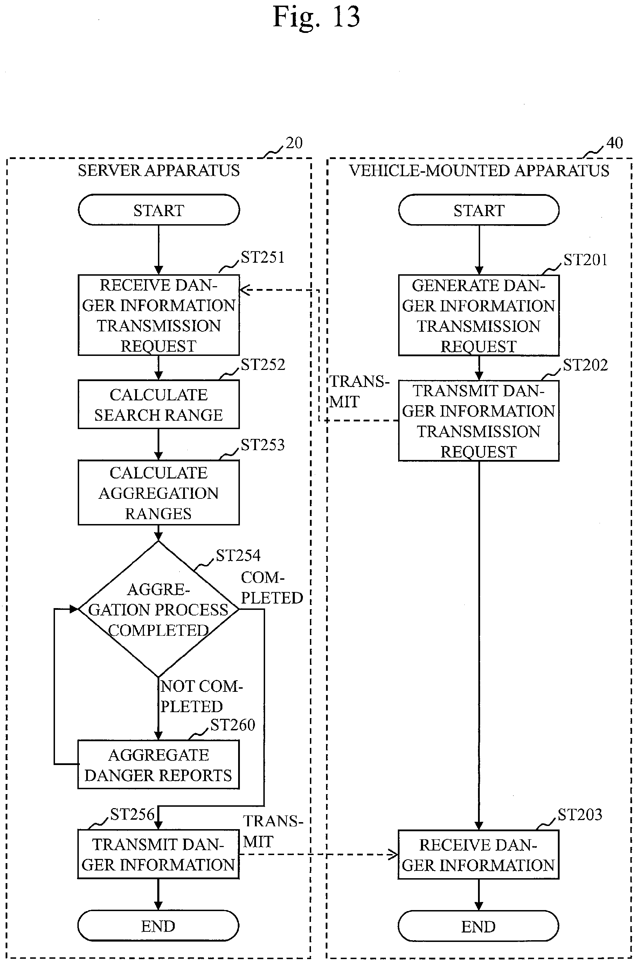

Fig. 13 is a flowchart illustrating operations of transmitting and receiving the danger information 70 in the danger information notification system 10.

The operations for the situation where the server apparatus 20 transmits the danger information 70 to the vehicle-mounted apparatus 40 in the danger information notification system 10 will be described, mainly using Fig. 13.

The operations of the vehicle-mounted apparatus 40 (ST201, ST202, and ST203) are the same as those in Embodiment 1 illustrated in Fig. 6.

The operations of the server apparatus 20 will be described below.

ST251, ST252, ST253, ST254, and ST256 are the same as those in Embodiment 1 illustrated in Fig. 6.

In ST260, the control unit 21 aggregates zero or more danger reports 50 accumulated in the storage unit 23 for each aggregation range 72. Specifically, the control unit 21 first extracts the danger reports 50 included in each aggregation range 72, based on position information. Subsequently, the control unit 21 divides the danger reports 50 by the type of each danger report 50. The control unit 21 generates the one-time danger information 70 from the danger reports 50 for each type. The control unit 21 sets the type of the danger information 70 to be the same as the type of the danger reports 50 aggregated. The control unit 21 sets a position or a combination of a plurality of positions selected from the occurrence position of at least one danger report 50 to the occurrence position of the danger information 70. To take an example, the control unit 21 selects the occurrence position of the danger report 50 having a maximum weight. Alternatively, the control unit 21 adds the occurrence positions of the danger reports 50 each multiplied by the weight, and divides a result of the addition by a total of the weights for the respective occurrence positions. When no danger report 50 for aggregation is present in the storage unit 23, the control unit 21 does nothing.

As mentioned above, the server apparatus 20 according to this embodiment uses the weight calculated at a time of receiving each danger report 50 when the danger reports 50 accumulated in the storage unit 23 are aggregated. Accordingly, control of not using the danger report 50 having a low precision of position information for generation of the danger information 70 may be implemented. That is, the danger information 70 with higher reliability may be provided to the driver of the vehicle including the vehicle-mounted apparatus 40.

The danger reports 50 in this embodiment are an example of event data indicating a position observed by an apparatus including a positioning function (vehicle-mounted apparatus 40) and one or more events. When the number of positions where one or more of the events have occurred within an aggregation range 72 is larger than a one-time limitation number, for example, the control unit 21 of the server apparatus 20 selects information on one or some of the events that have occurred at one or some of those positions, according to the positioning precision of the apparatus that has observed those positions. The information extracted is thereby aggregated. With this arrangement, the danger information 70 may be generated by preferentially using data with high reliability.

The server apparatus 20 may calculate a weight to be applied to each danger report 50 for aggregation or may calculate a weight to be applied at a timing of an aggregation process, using an item other than the unique apparatus name and the GPS satellite quantity included in each danger report 50. The server apparatus 20 may, for example, set a smaller weight for the danger report 50 having an old occurrence time. This provides an effect that a degree of influence of each danger report 50 in the aggregation process may be finely adjusted.

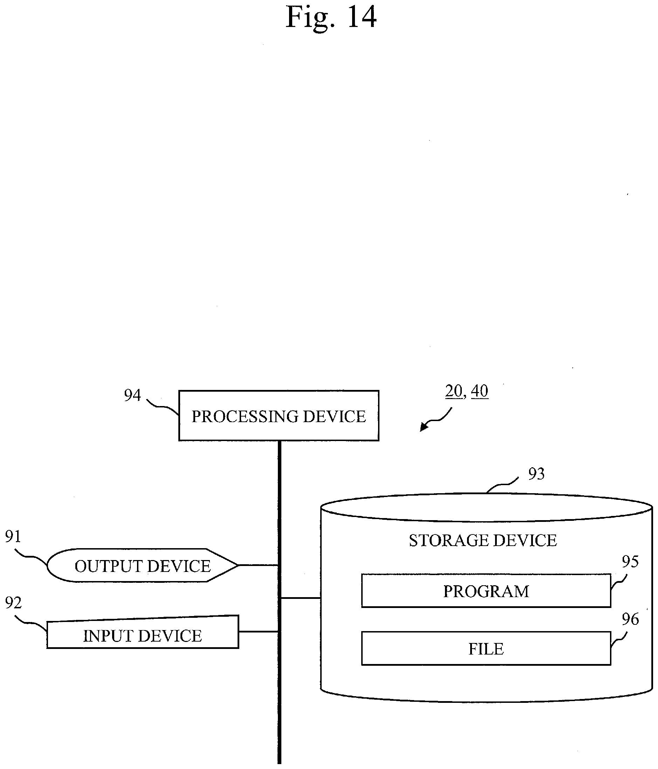

Fig. 14 is a diagram illustrating an example of a hardware configuration of each of the apparatuses (i.e., the server apparatus 20 and the vehicle-mounted apparatus 40) included in the danger information notification system 10 according to the embodiments of the present invention.

Referring to Fig. 14, each apparatus in the danger information notification system 10 is a computer, and includes hardware such as an output device 91, an input device 92, a storage device 93, and a processing device 94. The hardware is used by each unit (described as each "unit" in the description of the embodiments of the present invention) of each apparatus in the danger information notification system 10.

The output device 91 is a display device such as an LCD (Liquid Crystal Display), a printer, or a communication module (communication circuit or the like), for example. The output device 91 is used for output (transmission) of data, information, or a signal by each "unit" described in the description of the embodiments of the present invention. The information presentation unit 46 of the vehicle-mounted apparatus 40 may be implemented by the output device 91.

The input device 92 is a keyboard, a mouse, a touch panel, or a communication module (communication circuit or the like), for example. The input device 92 is used for input (reception) of data, information, or a signal by each "unit" described in the description of the embodiments of the present invention.

The storage device 93 is a ROM (Read Only Memory), a RAM (Random Access Memory), an HDD (Hard Disk Drive), or an SSD (Solid State Drive), for example. A program 95 and a file 96 are stored in the storage device 93. The program 95 includes a program to execute processing (function) of each "unit" described in the description of the embodiments of the present invention. The vehicle information collection unit 43, the road information acquisition unit 24, the road information acquisition unit 47, the apparatus precision acquisition unit 25, the apparatus information acquisition unit 48, for example, may be each implemented as the program mentioned above. The file 96 includes data, information, signal (values) and so forth whose operation, processing, reading, writing, use, input, output, and so forth are performed by each "unit" described in the description of the embodiments of the present invention. The storage unit 23 of the server apparatus 20 and the storage unit 45 of the vehicle-mounted apparatus 40 may be each implemented by the storage device 93.

The processing device 94 is a CPU (Central Processing Unit), for example. The processing device 94 is connected to the other hardware devices through a bus or the like to control those hardware devices. The processing device 94 reads the program 95 from the storage device 93 to execute the program 95. The processing device 94 is used by each "unit" described in the description of the embodiments of the present invention for performing the operation, the processing, the reading, the writing, the use, the input, the output, and so forth. The control unit 21 of the server apparatus 20 and the control unit 41 of the vehicle-mounted apparatus 40 may be each implemented by the processing device 94.

Each "unit" described in the description of the embodiments of the present invention may be replaced by a "circuit", a "device", or an "apparatus". Each "unit" described in the description of the embodiments of the present invention may be replaced by a "step", a "procedure", or a "process". That is, each "unit" described in the description of the embodiments of the present invention is implemented by software alone, hardware alone, or a combination of the software and the hardware. The software is stored in the storage device 93 as the program 95. The program 95 is the one that causes the computer to function as each "unit" described in the description of the embodiments of the present invention. Alternatively, the program 95 is the one that causes the computer to execute processing of each "unit" described in the description of the embodiments of the present invention.

Though the above description has been given about the embodiments of the present invention, some of these embodiments may be combined to be executed. Alternatively, any one or some of these embodiments may be partially executed. To take an example, just any one of the "units" described in the description of these embodiments may be adopted, or an arbitrary combination of some of the units may be adopted. The present invention is not limited to these embodiments, and various modifications are possible as necessary.

### Reference Signs List

10: danger information notification system, 20: server apparatus, 21: control unit, 22: communication unit, 23: storage unit, 24: road information acquisition unit, 25: apparatus precision acquisition unit, 30: network, 40: vehicle-mounted apparatus, 41: control unit, 42: communication unit, 43: vehicle information collection unit, 44: current location detection unit, 45: storage unit, 46: information presentation unit, 47: road information acquisition unit, 48: apparatus information acquisition unit, 50: danger report, 60: danger information transmission request, 70: danger information, 71: search range, 72: aggregation range, 91: output device, 92: input device, 93: storage device, 94: processing device, 95: program, 96: file

## Claims

1. A driving assistance information generation system to generate driving assistance information to be provided to a driver of a vehicle, comprising:
a storage unit to store event data indicating a geographical position and one or more events that have occurred at that position in the past; and
a control unit to extract, from the event data stored in the storage unit, information on one or more of the events that have occurred within a geographical range of a size corresponding to a speed of the vehicle, and to aggregate the information extracted, thereby generating the driving assistance information.

2. The driving assistance information generation system according to claim 1,
wherein when an amount of the information on the one or more of the events that have occurred within the geographical range is larger than a limitation amount that has been set, the control unit selects a part of the information, thereby aggregating the information extracted.

3. The driving assistance information generation system according to claim 2,
wherein when a number of the one or more of the events that have occurred within the geographical range is larger than a limitation number that has been set, the control unit selects information on one or some of those events as the part of the information.

4. The driving assistance information generation system according to claim 3,
wherein the control unit selects the information on the one or some of the events according to a date and a time when each of the one or more of the events has occurred within the geographical range.

5. The driving assistance information generation system according to claim 2,
wherein the storage unit stores data indicating the position observed by an apparatus including a positioning function and the one or more events, as the event data, and
wherein when a number of positions where the one or more of the events have occurred within the geographical range is larger than a limitation number that has been set, the control unit selects, as the part of the information, information on one or some of the events that have occurred at one or some of those positions, according to a positioning precision of the apparatus that has observed those positions.

6. The driving assistance information generation system according to claim 1,
wherein when a number of positions where two or more of the events with a same type that have occurred within the geographical range is larger than a limitation number that has been set, the control unit generates information indicating a statistic of those positions and the type of the two or more of the events, as the driving assistance information.

7. The driving assistance information generation system according to any one of claims 1 to 6,
wherein the control unit predicts a position to be passed through by the vehicle in the future, based on a position and the speed of the vehicle, and sets, as the geographical range, a range to be passed through by the vehicle from the position predicted.

8. The driving assistance information generation system according to claim 7,
wherein the control unit refers to road information and when an intersection is present within the range to be passed through by the vehicle, the control unit sets the geographical range by division by the intersection.

9. The driving assistance information generation system according to any one of claims 1 to 8,
wherein the control unit sets the size of the geographical range according to a speed statistic of the vehicle obtained from a history of speeds of the vehicle.

10. The driving assistance information generation system according to any one of claims 1 to 9,
wherein the control unit sets the size of the geographical range according to the speed of the vehicle and a speed of a different vehicle that is present in the vicinity of the vehicle.

11. The driving assistance information generation system according to any one of claims 1 to 10,
wherein when the speed of the vehicle is lower than a threshold value, the control unit sets the size of the geographical range to a minimum size value.

12. The driving assistance information generation system according to any one of claims 1 to 11,
wherein the control unit is provided at a server apparatus to communicate with a vehicle-mounted apparatus that is mounted on the vehicle.

13. The driving assistance information generation system according to any one of claims 1 to 11,
wherein the control unit is provided at a vehicle-mounted apparatus that is mounted on the vehicle.

14. The driving assistance information generation system according to any one of claims 1 to 12, further comprising:
another control unit to select information to be provided to the driver of the vehicle from the driving assistance information generated by the control unit, according to a state of the vehicle.

15. The driving assistance information generation system according to any one of claims 1 to 12, further comprising:
another control unit to specify, for the control unit, a condition for aggregating the information extracted.

16. The driving assistance information generation system according to any one of claims 1 to 12, further comprising:
another control unit to request the control unit to set the geographical range when an amount of change in a travelling direction of the vehicle exceeds a threshold value.

17. The driving assistance information generation system according to any one of claims 14 to 16,
wherein the another control unit is provided at a vehicle-mounted apparatus that is mounted on the vehicle.

18. The driving assistance information generation system according to any one of claims 1 to 17,
wherein the one or more events indicated by the data are each a danger event that has occurred on a road.

19. A driving assistance information provision apparatus to provide driving assistance information to a driver of a vehicle, comprising:
a control unit to perform control to display the driving assistance information generated by aggregating, from event data indicating a geographical position and one or more events that have occurred at that position in the past, information on one or more of the events that have occurred within a geographical range of a size corresponding to a speed of the vehicle.

20. A driving assistance information generation method of generating driving assistance information to be provided to a driver of a vehicle, comprising:
by a computer including a storage unit to store event data indicating a geographical position and one or more events that have occurred at that position in the past, extracting, from the event data stored in the storage unit, information on one or more of the events that have occurred within a geographical range of a size corresponding to a speed of the vehicle, and aggregating the information extracted, thereby generating the driving assistance information.

21. A driving assistance information generation program of generating driving assistance information to be provided to a driver of a vehicle, the program causing a computer including a storage unit to store event data indicating a geographical position and one or more events that have occurred at that position in the past to execute:
a control process to extract, from the event data stored in the storage unit, information on one or more of the events that have occurred within a geographical range of a size corresponding to a speed of the vehicle, and to aggregate the information extracted, thereby generating the driving assistance information.
